# EUROPEAN PATENT APPLICATION

(11) **EP 1 564 909 A2**
(43) Date of publication of application: **17.08.2005**
(21) Application number: 05075315.1
(22) Date of filing: 09.02.2005
(51) Int. Cl.: H04B 7/08

(54) **Receiver, method of receiving, and computer product**

(30) Priority: 13.02.2004 JP 2004036787
(71) Applicant: Pioneer Corporation, Tokyo 153-8654 (JP)
(72) Inventor: Hoshino, Hironobu, c/o Pioneer Corporation, Kawagoe-shi Saitama 350-8555 (JP); Miyahara, Yutaka, c/o Pioneer Corporation, Kawagoe-shi Saitama 350-8555 (JP)
(74) Representative: Browne, Robin Forsythe, Dr.

(57) **Abstract**

In a receiver, a plurality of antennas (1a, 1 b) receive a signal, a reception signal output unit (2) selects the signal received by one or more of the antenna or a combination of the signals received by one or more of the antenna based on a condition, and a signal processing unit (3) processes the selected signals. The receiver also includes a parameter acquiring unit (5) that acquires a plurality of parameters including at least one parameter concerning the received signal, and a controlling unit (7) that determines whether to change the condition based on the parameter concerning the received signal and that changes the condition based on the determination.

## Description

### BACKGROUND OF THE INVENTION

### 1) Field of the Invention

The present invention relates to a receiver, a method of receiving, and a computer product.

### 2) Description of the Related Art

In recent years, it has become known for a receiver to use a diversity reception technique, which is a technique that switches among a plurality of antennas to enable the stable reception of terrestrial digital broadcasting in a mobile object like an automobile (see Japanese Unexamined Patent Publication No. 2003-143100). Terrestrial digital broadcasting employs the Orthogonal Frequency Division Multiplexing (OFDM) system, which is robust against multipathing and phasing.

However, in the above conventional art, the diversity operation for switching the antenna is conducted by sequentially switching transmission signals from antennas based on the kind of information obtained from a reception signal, such as the power of the reception signal. As a result, if the kind of information (e.g., received signal power) is unchanged, but the reception state of the receiver changes, such as when a signal-to-noise ratio of the reception signal or the speed of the mobile object changes, the diversity operation cannot respond to the change in the reception state, which is one example of the problems associated with the conventional art.

### SUMMARY OF THE INVENTION

It is an object of the present invention to solve at least the problems in the conventional technology.

A receiver according to an aspect of the present invention includes a plurality of antennas that receive a signal; a reception signal output unit that selects the signal received by one or more of the antennas or a combination of the signals received by one or more of the antennas based on a condition; a signal processing unit that processes the selected signals; a parameter acquiring unit that acquires a plurality of parameters including at least one parameter concerning the received signal; and a controlling unit that determines whether to change the condition based on the parameter concerning the received signal and that changes the condition based on the determination.

A receiver according to an aspect of the present invention includes a plurality of antennas that receive a signal; a reception signal output unit that selects the signal received by one or more of the antennas or a combination of the signals received by one or more of the antennas based on a condition; a signal processing unit that processes the selected signals; a parameter acquiring unit that acquires a first parameter concerning the received signal and a second parameter; and a controlling unit that determines whether to change the condition based on the first parameter and the second parameter, and that changes the condition based on the determination.

A method of receiving according to an aspect of the present invention includes selecting a signal received by one or more of antennas or a combination of signals received by the antennas based on a condition; processing the selected signal; acquiring a plurality of parameters including at least one parameter concerning the received signal; determining whether to change the condition based on the acquired parameters; and changing the condition based on the determination.

The computer-readable recording medium according to still another aspect of the present invention stores therein a computer program which causes a computer to execute the above method of receiving.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a receiver in an embodiment;
Fig. 2 is a list of examples of parameters regarding reception signal;
Fig. 3 is a list of examples of parameters regarding reception environment;
Fig. 4 is a block diagram of a receiver in a first example;
Fig. 5 is a flowchart for changing a reception condition according to the first example;
Fig. 6 is a view of one exemplary operation table;
Fig. 7 is a flowchart for controlling a reception signal output unit using the operation table shown in Fig. 6;
Fig. 8 is a view of another exemplary operation table;
Fig. 9 is a view of another exemplary operation table;
Fig. 10 is a view of an exemplary arrangement of pilot signals in an FDM transmission method;
Fig. 11 is a view of frequency characteristics of pilot signals transmitted by a transmitting end;
Fig. 12 is a view of frequency characteristics of pilot signals received by a receiving end;
Fig. 13 is a view of an exemplary operation table used in a second example;
Fig. 14 is a flowchart for changing a reception condition according to a third example;
Fig. 15 is a view of another exemplary operation table; and
Fig. 16 is a flowchart for controlling and changing a reception condition while selecting an operation table according to the third example.

### DETAILED DESCRIPTION

Exemplary embodiments of a receiver, a method of receiving, and a computer product will be explained in detail below with reference to the attached drawings.

In accordance with the present invention, it is possible to enable the continuous selection of optimum reception condition.

A reception condition depends on an antenna in the case of an antenna switching method, or on a phase difference or a level in the case of a power feeding method based on phase difference. The term "change reception condition" in the following description means to change the condition of reception signal, such as the level or delay, by way of, for example, switching the antenna or adjusting the phase or level. The following description will explain an exemplary case in which a receiver is mounted on a vehicle, which is a mobile object, and a reception condition is changed according to a change in reception state resulting from movement of the vehicle.

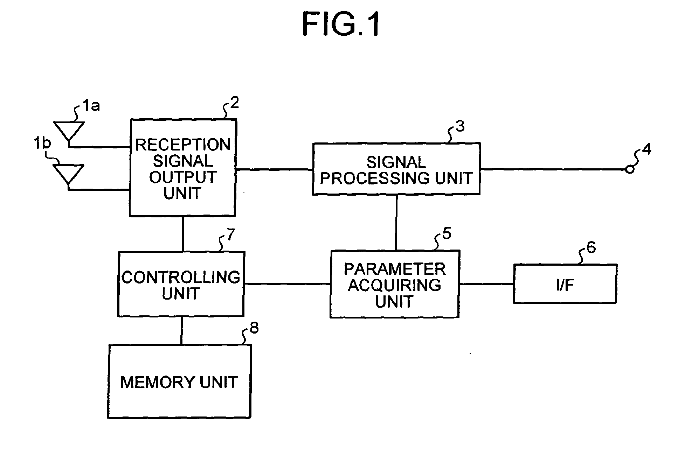

Fig. 1 is a block diagram of a receiver in one embodiment. The receiver receives a transmission signal with a plurality of antennas 1a and 1b. Two or more antennas are preferably provided for diversity reception. A reception signal output unit 2 selects and outputs a transmission signal received at the antenna 1a, 1b to a signal processing unit 3 under the control of a controlling unit 7. The signal processing unit 3 demodulates the transmission signal selected by the reception signal output unit 2 in a predetermined communication method, and outputs the demodulated result through an output terminal 4.

A parameter acquiring unit 5 acquires a reception signal parameter upon reception of the transmission signal and a reception environment parameter of the receiver. It may acquire information for calculating a reception signal parameter or information for calculating a reception environment parameter and calculate such parameters. These parameters and information for calculating such parameters are acquired via the signal processing unit 3 and an interface (I/F) 6. Although not shown in the drawing, various elements can be connected to the I/F 6 including a sensor that detects various parameters, a GPS unit that detects a current position of the vehicle, a reproducing device that plays back a recording medium in which map data is recorded, a communication unit for an external communication network such as the Internet that transmits information like the weather, and other related elements.

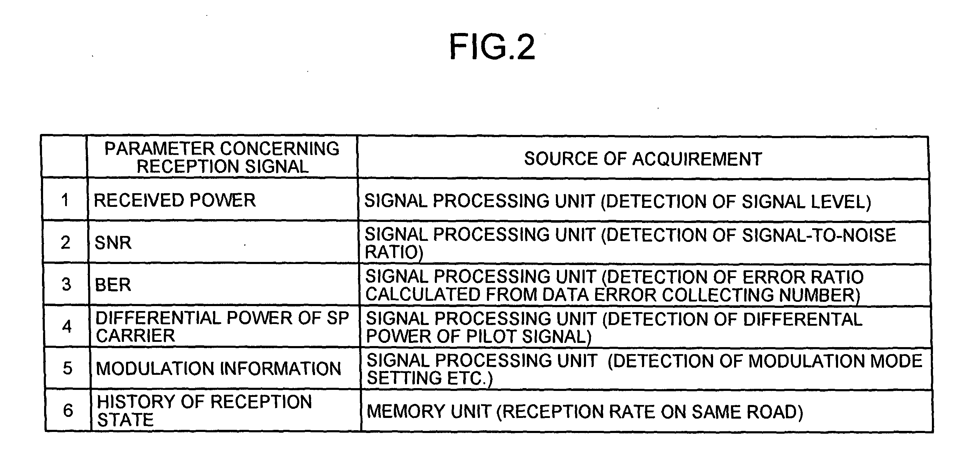

Fig. 2 is a list of exemplary reception signal parameters. Reception signal parameters can be obtained from a reception signal and represent the reception state of the receiver. The reception signals parameters include, for example, received power, SNR (signal-to-noise ratio of reception signal), BER (bit error rate), differential power of SP carrier (differential power of pilot signal), modulation information (modulation mode, guard interval convolution coding rate, depth of time interleave), and history of reception state (reception rate on the same road).

For the reception signal parameters, for example, a detection output can be used of each component of the signal processing unit 3. A detection result of a signal level of a reception signal can be used as the received power. A detection result of a signal-to-noise ratio can be used as the SNR. A detection result representing a ratio of error collecting number to the total data number can be used as the BER. In the case of digital demodulation, the error collecting number is a number of bits (error collecting number) in which an error is collected by an error collecting unit (not shown) within a predetermined number of bits. A detection result of a power difference between a high-power pilot signal and a low-power pilot signal in pilot signals for every frequency can be used as the differential power of SP carrier in the case of digital demodulation. Setting contents in a modulation mode can be looked up and used as the modulation information. Reception rates on the road routes previously used that are stored in advance in a memory unit 8 can be looked up and used as the history of reception state of the receiver.

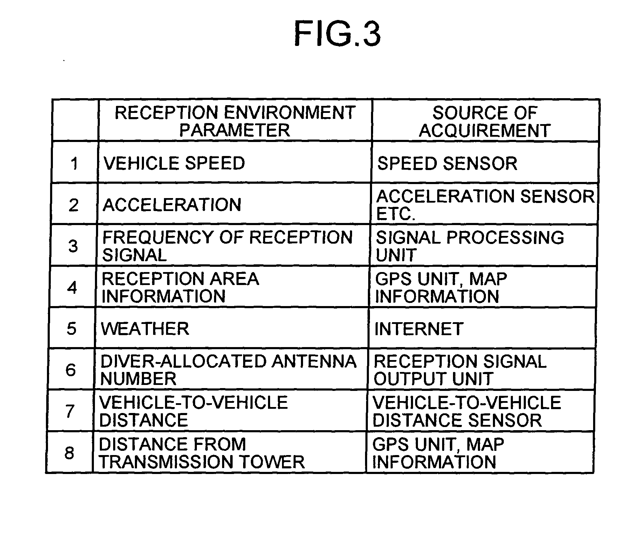

Fig. 3 is a list of exemplary reception environment parameters. The reception environment parameters indicate a reception state of a receiver other than the reception signal parameters. For example, the reception environment parameters can include moving speed of a mobile object on which the receiver is mounted (vehicle speed), acceleration, frequency of reception signal, reception area information, weather, diver allocated antenna number, vehicle-to-vehicle distance, distance from transmission tower and other related parameters.

Detection outputs and the related input through the signal processing unit 3 or the I/F 6 can be used as the reception environment parameters. For example, a detection result of a speedometer (speed sensor) of vehicle can be used as the vehicle speed. A detection result of an acceleration sensor or a detection result of a temporal change in vehicle speed can be used as the acceleration. Channel information set via an operation unit (not shown) and a detection result of a frequency corresponding to the reception channel selected via the signal processing unit 3 can be used as the reception signal frequency. Positional information from a GPS unit (not shown) that detects a current position of a vehicle and map information can be used as the reception area information. Weather information for the current position of the vehicle received from the Internet or other communication system can be used as the weather. A number of antennas specified and selected at the reception signal output unit 2 can be used as the diver allocated antenna number. A detection result of, for example, a vehicle-to-vehicle distance sensor that detects a distance from the car ahead, such as by using ultrasound, can be used as the vehicle-to-vehicle distance. A current distance of the vehicle from a transmission tower as calculated from a position of a transmission tower in accordance with the map information and a current vehicle position obtained from the GPS unit can be used as the distance from transmission tower.

The controlling unit 7 determines whether the reception condition of the reception signal output unit 2 needs to be changed by using parameters obtained by the parameter acquiring unit 5. When the reception condition needs to be changed, the controlling unit 7 controls the reception signal output unit 2 to selectively switch between the antennas 1a and 1b.

The memory unit 8 stores information concerning requirements for changing the reception condition of the reception signal output unit 2 that are set according to parameters acquired by the parameter acquiring unit 5. The information concerning requirements for changing the reception condition is referred to as an operation table. The controlling unit 7 looks up an operation table corresponding to a parameter acquired by the parameter acquiring unit 5, determines whether the reception condition needs be changed, and controls the reception signal output unit 2 in accordance with the determination.

The controlling unit 7 can determine whether the reception condition of the reception signal output unit 2 needs to be changed based on two parameters, namely a first parameter and a second parameter. An operation table stored in the memory unit 8 comprises a combination of the first parameter and the second parameter. Herein, the "first parameter" can be a reception signal parameter, and the "second parameter" can be a reception signal parameter or a reception environment parameter. Two or more parameters may be used as the second parameter instead of one parameter. An operation table assigns a certain threshold for each value of the first parameter and each value of the second parameter and specifies any requirement for each of a plurality of combinations that are bordered by the thresholds. The memory unit 8 stores a plurality of operation tables in advance. Concrete examples for the operation table will be described later.

In this manner, by controlling the reception signal output unit 2 using a plurality of parameters representing the reception state of the receiver such as reception signal parameters and reception environment parameters, it is possible to respond to changes in the reception state of the receiver. In addition, by using at least one reception signal parameter, it is possible to detect the condition of the reception signal and more accurately grasp the reception state of the receiver.

Next, the following description will explain examples of changes of the reception condition.

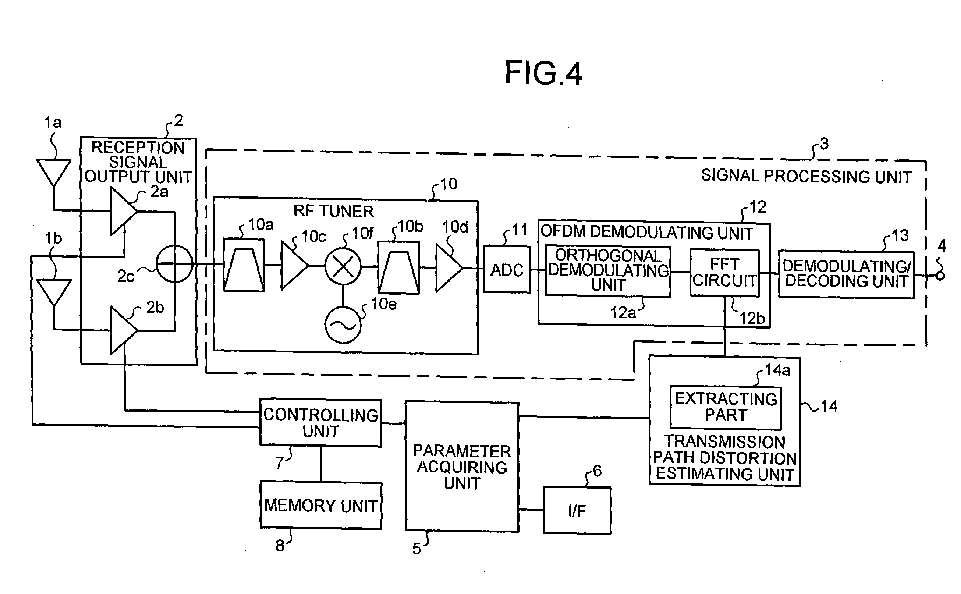

Fig. 4 is a block diagram of one example of a receiver in a first example. Fig. 4 depicts an internal structure of a digital broadcasting receiver for receiving digital broadcasting, and an element similar to that in Fig. 1 is denoted by the same reference number.

The reception signal output unit 2 includes AGC amplifiers 2a, 2b and an adder 2c. The AGC amplifiers 2a, 2b switchingly operate under the control of controlling unit 7. The reception signal output unit 2 selects either the antenna 1a or the antenna 1b (i.e., an antenna switching method). Alternatively, the reception signal output unit can be configured so that the gain of either AGC amplifier 2a or 2b of the unselected antenna 1a or 1b is reduced to cut off the input or configured so that the transmission signal is output while the proportion thereof in the combining ratio is reduced in the adder 2c (i.e., a phase difference power feeding method).

The signal processing unit 3 comprises an RF tuner 10, an ADC 11, an OFDM demodulating unit 12 and a demodulating/decoding unit 13. The RF tuner 10 includes filters 10a, 10b, variable gain amplifiers 10c, 10d, an oscillator 10e, a mixer 10f and any other related component. The RF tuner 10 selects an OFDM signal of a desired target wave from the transmission signal selected by the reception signal output unit 2, converts it to an OFDM signal of an intermediate frequency with a mixer 10f, and outputs an OFDM signal to the ADC 11.

The ADC 11 converts the transmission signal of intermediate frequency output from the RF tuner 10 to a digital signal from an analog signal and outputs the result to the OFDM demodulating unit 12. The OFDM demodulating unit 12 has an orthogonal demodulating unit 12a and a fast Fourier transform (FFT) circuit 12b. The orthogonal demodulating unit 12a converts the digitalized transmission signal into a base band signal (i.e., a complex base band OFDM signal). The base band signal is input to the FFT circuit 12b. The FFT circuit 12b extracts signals included in a predetermined FFT window period and converts the extracted signals into signals on a frequency axis using an FFT. As a result, it is possible to obtain modulated respective wave symbol signals for a plurality of orthogonal frequency signals within the OFDM signal. The demodulating/decoding unit 13 demodulates the modulated wave symbol signals to obtain symbol data, reproduces the data by decoding, and outputs the data from an output terminal 4.

A transmission path distortion estimating unit 14 has an extracting part 14a that extracts a pilot signal SP. The extracting part 14a extracts a pilot signal SP from signals (i.e., carrier) demodulated by the OFDM demodulating unit 12. The transmission path distortion estimating unit 14 estimates distortion of the transmission path from the extracted pilot signal.

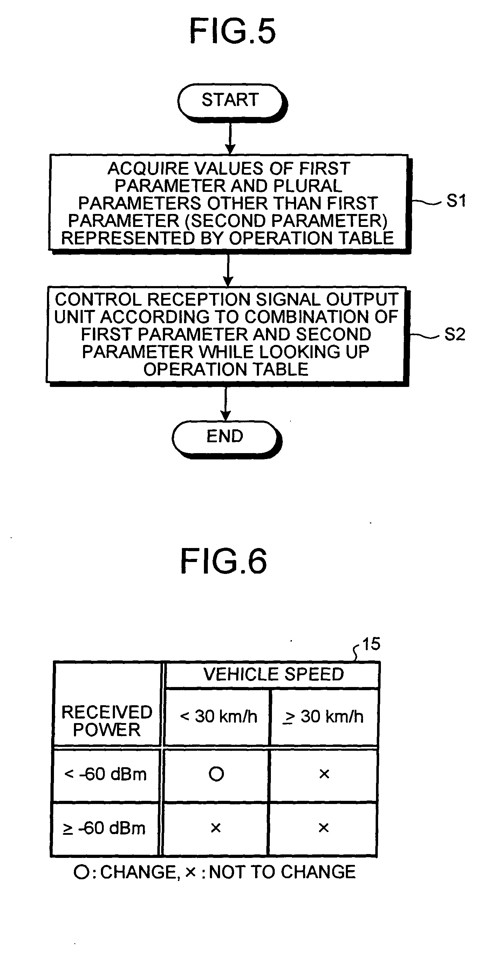

In the first example, a configuration will be explained where the reception signal output unit 2 is controlled using a plurality of parameters. Fig. 5 is a flowchart of a changing control process in accordance with the reception condition according to the first example.

First, the parameter acquiring unit 5 acquires a value of the first parameter and a value of the second parameter in a selected operation table (step S1). At this time, one reception signal parameter is used at least as the first parameter. A reception signal parameter or a reception environment parameter can be used as the second parameter. Two or more parameters can be used as the second parameter instead of one parameter.

The controlling unit 7 looks up the operation table and controls reception signal output unit 2 according to a result for the combination of the acquired values of the first parameter and the second parameter (step S2). In controlling the reception signal output unit 2, it is determined whether the reception condition needs to be changed, and the reception condition is changed or kept unchanged according to the determination result.

Fig. 6 is a view illustrating one example of an operation table. As shown in Fig. 6, an operation table 15 uses received power as the first parameter and vehicle speed as the second parameter. For example, according to this table, if the received power is less than -60 decibel milliwatt and the vehicle speed is less than 30 km/h, then the reception condition is changed, whereas the reception condition is not changed if the vehicle speed is equal to or more than 30 km/h. If the received power is equal to or more than -60 decibel milliwatt, then the reception condition is not changed regardless of the vehicle speed.

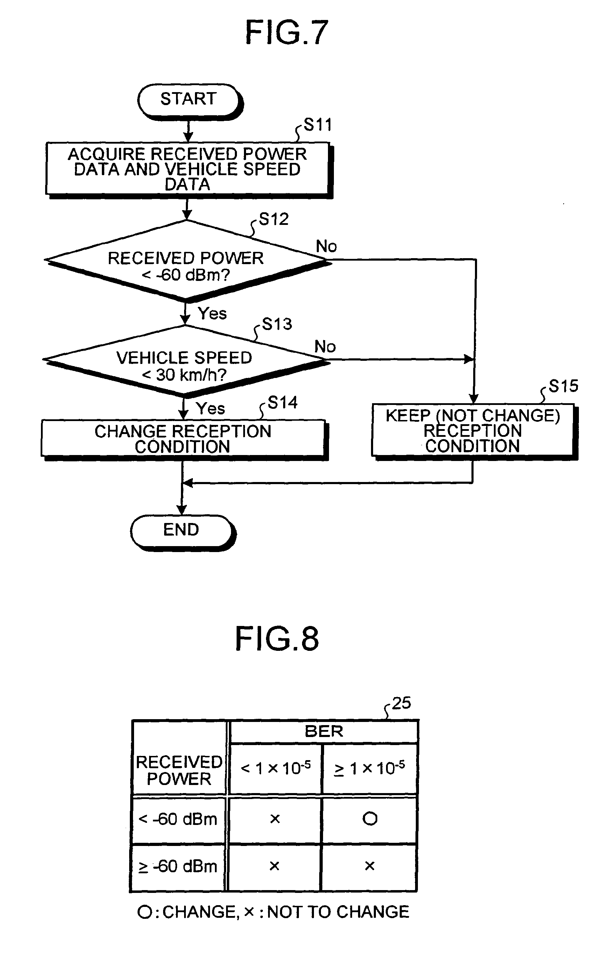

Fig. 7 is a flowchart for illustrating control of the reception signal output unit 2 using the operation table shown in Fig. 6. First, the parameter acquiring unit 5 acquires data (i.e., a value) of the received power, which is the first parameter, and data (i.e., a value) of vehicle speed, which is the second parameter in the set operation table 15 (step S11).

The controlling unit 7 looks up the operation table 15 shown in Fig. 6, which is stored in the memory unit 8, and makes a judgment regarding the acquired value of the received power. First, it is determined whether the received power is less than -60 decibel milliwatt (step S12), and if it is less than -60 decibel milliwatt (step S12: Yes), then a judgment is made with respect to the value of vehicle speed. It is determined whether the vehicle speed is less than 30 km/h (step S13), and if it is less than 30 km/h (step S13: Yes), then the reception condition is changed (step S14), which ends the process.

As a result, the controlling unit 7 outputs to the reception signal output unit 2 a control signal to change the reception condition. The reception signal output unit 2 switches the currently selected antenna to a different antenna. For example, if the antenna 1a is currently selected until, then the reception signal output unit switches the selection to the other antenna 1b.

If the received power is equal to or more than -60 decibel milliwatt at step S12 (step S12: No), or if the vehicle speed is equal to or more than 30 km/h at step S13 (step S13: No), the process ends while the reception condition is kept unchanged in either case (step S15).

According to the configuration of the first example, it is possible to judge the condition for which to change the reception condition in response to the received power as the first parameter and the vehicle speed as the second parameter. In particular, since the reception condition is not only changed in consideration of changes in reception signal values but also in consideration of changes in reception environment values other than reception signal, it is possible to make the reception more suited to the reception state of the receiver.

Next, another operation table that can be used in the first example will be explained. Fig. 8 is a view of other example of an operation table. As shown in Fig. 8, an operation table 25 uses received power as the first parameter and BER as the second parameter. For example, according to this table, if the received power is less than -60 decibel milliwatt, then the reception condition is not changed if the BER is less than 1×10⁻⁵, but the reception condition is changed if the BER is equal to or more than 1×10⁻⁵. When the received power is equal to or more than -60 decibel milliwatt, the reception condition is not changed regardless of the BER. In this manner, a reception more suited to the reception state of the receiver can be used by using reception signal parameters for both the first parameter and as the second parameter.

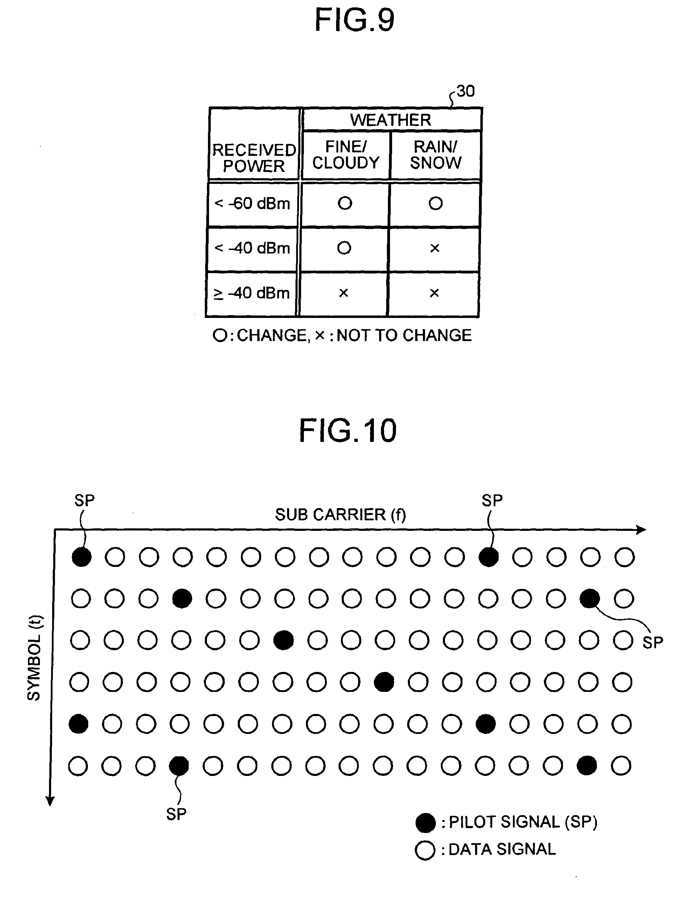

Fig. 9 is a view of another example of an operation table. As shown in Fig. 9, an operation table 30 uses received power as the first parameter and the weather as the second parameter. For example, according to this table, if the received power is less than -60 decibel milliwatt, then the reception condition is changed regardless of the weather. IF the received power is less than -40 decibel milliwatt, then the reception condition is changed if the weather is fine or cloudy, but the reception condition is not changed if the weather is rain or snow. If the received power is equal to or more than -40 decibel milliwatt, then the reception condition is not changed regardless of the weather. By selecting these parameters, it is possible to change the reception condition while taking into account any reduction or attenuation in received power due to rainfall or other precipitation.

Another possible operation table can use received power as the first parameter and modulation information as the second parameter. A modulation method of a receiver, such as QPSK, 16QAM, or 64QAM, can be used as the modulation information. The operation table can be set in such a manner that, in the case of using a QPSK modulation method capable of obtaining a reception electric wave in a relatively stable manner, the reception condition is changed as few times as possible if the received power is large, but in the case of a 64QAM modulation method, the reception condition is changed frequently. Both the received power and the modulation information are reception signal parameters.

As another possibility, a combination of received power as the first parameter and reception frequency as the second parameter can be used. The reception frequency can be, for example, VHF-L, VHF-H, or UHF. The operation table can be set in such a manner that, in the case of a VHF-L reception frequency capable of obtaining a reception electric wave in a relatively stable manner, the reception condition is changed as few times as possible if the received power is large, but in the case of a UHF reception frequency, the reception condition is changed frequently.

Next, a second example is explained of a configuration that controls the reception signal output unit 2 in a digital broadcasting receiver that receives digital broadcasting. The configuration of the digital broadcasting receiver can be the as same as that of the first example (see Fig. 4).

Fig. 10 is a view of an exemplary arrangement of a pilot signal in an OFDM transmission method. The vertical axis of Fig. 10 represents a symbol corresponding to time t and the horizontal axis represents a sub carrier corresponding to frequency f. In the OFDM transmission method used for e.g., terrestrial digital broadcasting, a transmitting end regularly inserts a pilot signal (SP: Scattered Pilot) with a known amplitude and phase into a data signal string of the transmission signal at predetermined positions on the frequency axis and time axis. In Fig. 10, a closed circle represents a pilot signal SP, and an open circle represents a data signal.

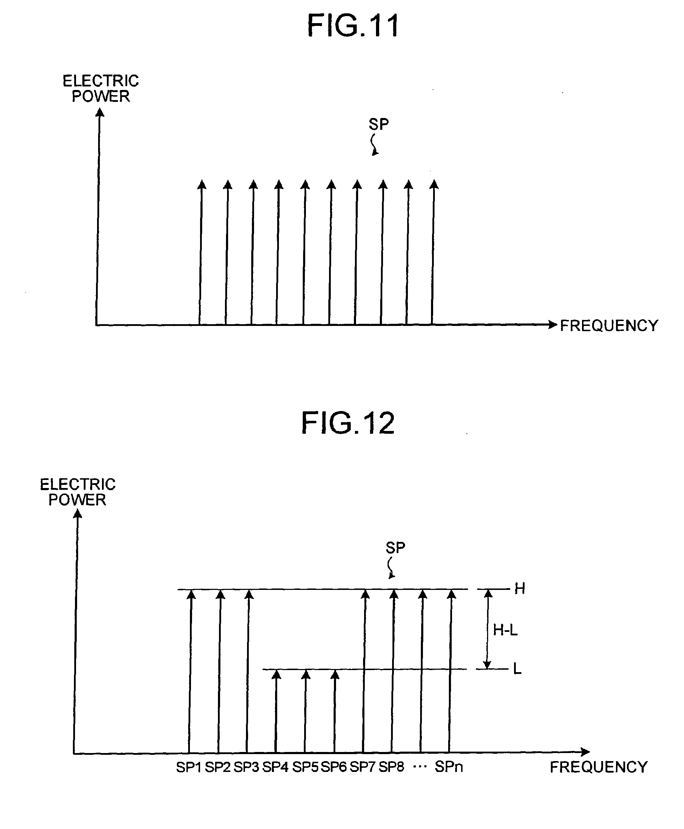

Fig. 11 is a diagram illustrating a frequency characteristic of a pilot signal transmitted from the transmitting end. In Fig. 11, the vertical axis represents electric power, and the horizontal axis represents frequency. When the transmission path has an ideal characteristic, i.e., when the transmission path has no distortion, the electric power is constant in every pilot signal SP of respective frequencies at the receiving end, resulting in a characteristic similar to that of Fig. 11.

Fig. 12 is a diagram illustrating frequency characteristic of pilot signals received at the receiving end. The vertical and horizontal axes in Fig. 12 are as same as those in Fig. 11. When a distortion such as multipathing or phasing occurs in the transmission path, the electric power in every pilot signal SP of respective frequencies does not remain constant, as shown in Fig. 12. Rather, a phenomenon occurs that the electric power is reduced in pilot signals SP of certain frequencies.

In the case of the above digital broadcasting receiver (see Fig. 4), the parameter acquiring unit 5 can use a differential power of an SP carrier based on the electric powers of pilot signals SP extracted by the extracting part 14a of the transmission path distortion estimating unit 14 as a reception signal parameter from the signal processing unit 3. The differential power of the SP carrier means a differential power H-L between pilot signals H in which electric power is large (SP1 to SP3, SP7 to SPn in Fig. 12) and pilot signals L in which electric power is small (SP4 to SP6 in Fig. 12). When a distortion occurs in the transmission path due to multipathing, phasing or other effect, the electric power in every pilot signal SP of different frequencies does not remain constant as shown in Fig. 12. As a result, a phenomenon occurs that the electric power is reduced in pilot signals SP of certain frequencies. In brief, it is possible to estimate the degree of distortion of the transmission path from the differential power of the SP carrier. The degree of distortion of the transmission path may be estimated by a method other than the method based on the SP carrier difference, and the resultant value may be used as a parameter.

When the receiver is mounted on a vehicle embodying the mobile object, a GPS unit (not shown) can be used to determine a current vehicle position (latitude and longitude). Positions of transmission towers that transmit an electric wave are stored in map information in advance, and when the vehicle moves, the parameter acquiring unit 5 calculates a current distance of the vehicle from a transmission tower based on the current vehicle position obtained from the GPS unit and a position of the transmission tower from the map information. Furthermore, the parameter acquiring unit 5 acquires the received power and the differential power of the SP carrier in addition to the distance from the transmission tower.

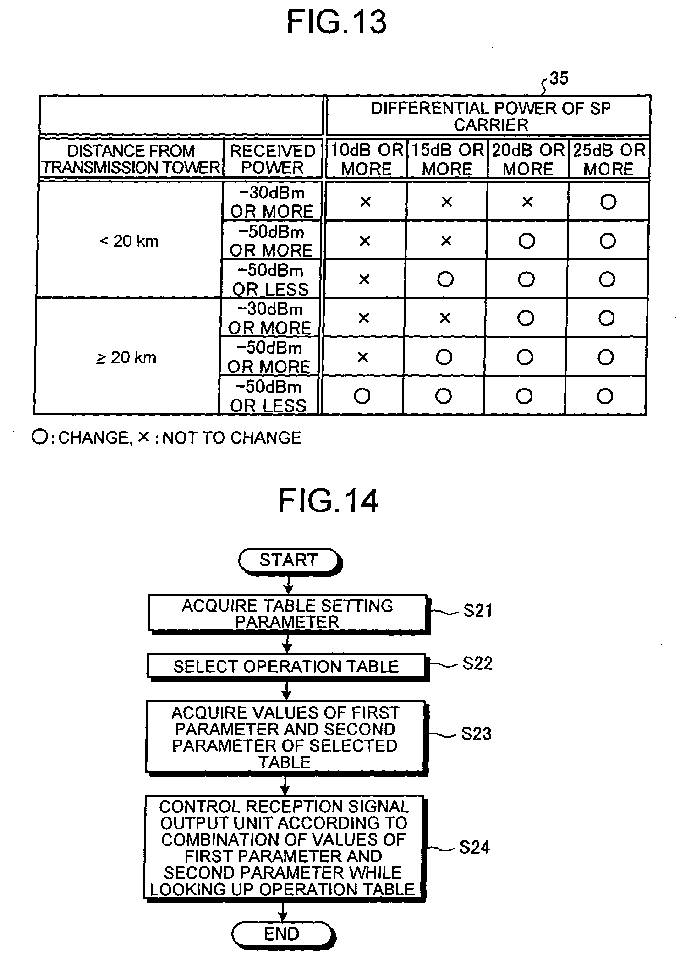

Fig. 13 is a view of an exemplary operation table used in a second example. As shown in Fig. 13, an operation table 35 includes received power, which is reception signal parameter, as the first parameter. The second parameter includes the differential power of the SP carrier, which is a reception signal parameter, and distance from transmission tower, which is a reception environment parameter. In the memory unit 8, as can be seen in Fig. 13, a list is providing specifying when to change the reception condition using a combination of the distance between the mobile object on which the receiver is mounted and the transmission tower and the differential power (H-L). When the differential power of the SP carrier is less than 10 decibels, the reception condition is unchanged.

In the illustrated example, distance from transmission tower is classified into a first group of less than 20 km and a second group of equal to or more than 20 km. Each group is combined with the received power and the differential power of the SP carrier. If the distance from transmission tower is less than 20 km, and the received power is equal to or more than -30 decibel milliwatt, but less than -50 decibel milliwatt, and if the differential power of the SP carrier (H-L) is less than 20 decibels, the reception condition is unchanged, but if the differential power of SP carrier is equal to or more than 20 decibels, then the reception condition is changed. If the distance from transmission tower is equal to or more than 20 km, and the received power is equal to or more than -30 decibel milliwatt, but less than -50 decibel milliwatt, and if the differential power of the SP carrier is equal to or more than 15 decibels, the reception condition is changed.

In the example shown in Fig. 13, the reception condition is changed more often the larger the differential power of the SP carrier and the smaller the received power. The settings are made so that the differential power of the SP carrier and the received power are less influential as the distance from the transmission tower decreases, and the differential power of the SP carrier and the received power are more influential as the distance from the transmission tower increases. In this manner, by combining a plurality of parameters for comparison, it is possible to change the reception condition more finely and suitably in response to the change in the reception state of the receiver.

A received power can be detected based on a detection of an RF signal by the RF tuner 10, an IF signal after passing thorough the mixer 10f, and a base band signal after passing through the filter 10b. Also, the detection may be made based on a digital signal after passing through the ADC 11.

In the configuration of the second example, an operation table 35 based on three parameters including the differential power of the SP carrier is used to control the reception signal output unit 2. The differential power of the SP carrier is one of the reception signal parameters serving as a first parameter. Accordingly, an operation table containing two combinations can be used. In particular, the differential power of the SP carrier serving as a first parameter can be used in an operation table in combination with a reception signal parameter serving as a second parameter (e.g., BER) or can be used in an operation table in combination with a reception environment parameter serving as a second parameter (e.g., vehicle speed).

As described above, according to the second example, by increasing the number of reception signal and reception environment parameters that are used, it is possible to control the changing of the reception condition more finely according to value changes of each parameter, which makes the reception more suitable for the reception state of the receiver. Although three parameters are used in second example, more parameters may be used.

A third example provides a configuration in which a plurality of operation tables are prepared, and the reception signal output unit 2 is controlled in accordance with an optimum operation table. Fig. 14 is a flowchart for controlling changes in the reception condition according to the third example.

First, the parameter acquiring unit 5 acquires a parameter used to initiate a judgment of whether to change the reception condition (step S21).
This acquired parameter can be referred to as the "table setting parameter." The table setting parameter provides information used to select one operation table from the plurality of operation tables. The table setting parameter can be acquired by the parameter acquiring unit 5 from the signal processing unit 3 of the I/F 6.

The controlling unit 7 selects an operation table suitable for the table setting parameter acquired at step S21 (step S22). The parameter acquiring unit 5 acquires a value of the first parameter and a value of the second parameter in the selected operation table (step S23). The controlling unit 7 looks up the selected operation table, and controls the reception signal output unit 2 according to a result of the combination of the acquired values of the first and second parameters (step S24). In controlling the reception signal output unit 2, a determination is made of whether the reception condition should be changed based on the combination of the acquired values of the first and second parameters, and the reception condition is changed in accordance with the determination.

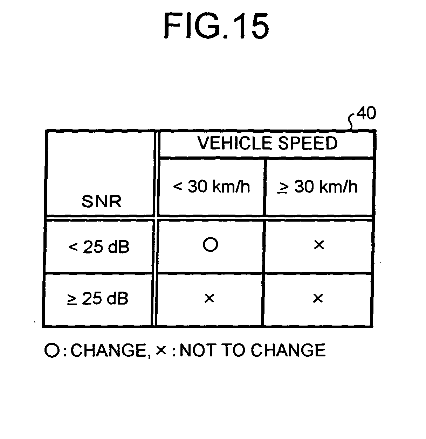

A specific example of changing a reception condition while selecting one operation table from the plurality of operation tables will be explained. Fig. 15 is a view of another exemplary operation table. An operation table 40 is shown which combines SNR as the first parameter and vehicle speed as the second parameter. According to the setting of this operation table, for example, if the SNR is less than 25 decibels, and the vehicle speed is less than 30 km/h, then the reception condition is changed, and if the vehicle is equal to or more than 30 km/h, then the reception condition is not changed. Also, according to the setting of this operation table, if the SNR is equal to or more than 25 decibels, the reception condition is not changed regardless of the vehicle speed.

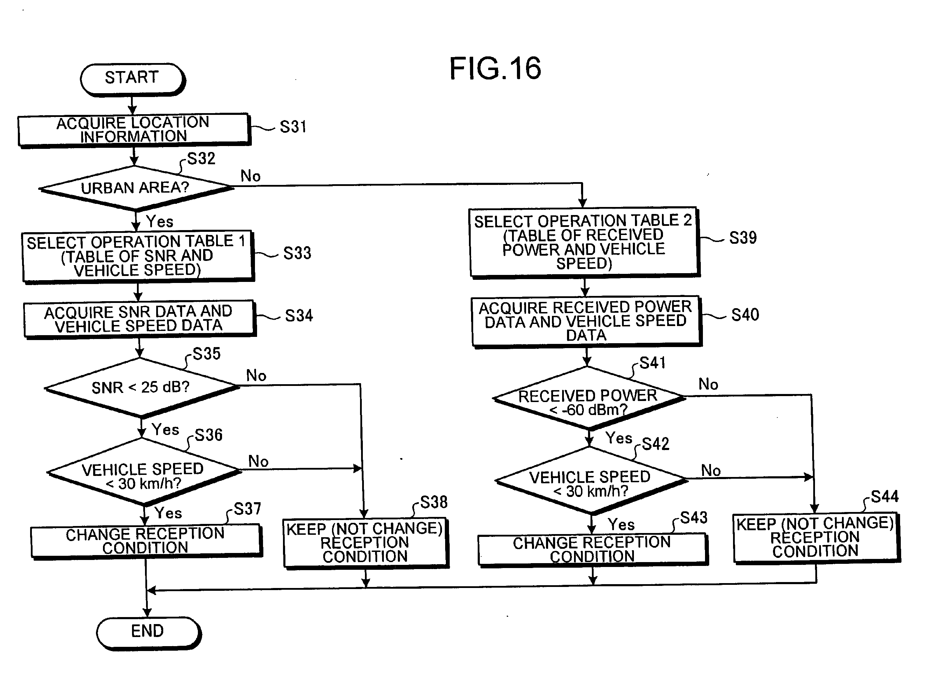

Fig. 16 is a flowchart for controlling the reception signal output unit 2 while selecting either one of the operation table 15 shown in Fig. 6 (operation table 2 in Fig. 16) or the operation table 40 shown in Fig. 15 (operation table 1 in Fig. 16). In this case, reception area information (i.e., positional information) is used as a table setting parameter. Based on this table setting parameter, an operation table for use in control of the reception condition is selected.

First, the parameter acquiring unit 5 acquires reception area information of the current location of the vehicle as a table setting parameter used to initiate a judgment of whether to change the reception condition (step S31). The parameter acquiring unit 5 calculates a parameter in accordance with the reception area information that represents whether the current vehicle position is in an urban area (dense area) or in a suburb (not dense area) based on positional information (latitude and longitude) of the vehicle position obtained by the GPS unit and map information obtained from the reproducing device. The value of the calculated parameter can be, for example, "0" for urban area, and "1" for a suburban area.

The controlling unit 7 determines whether the current vehicle position is in an urban area (step S32). If the current vehicle position is in an urban area (step S32: Yes), the operation table 1, which is suitable for use in urban areas, is selected (step S33). On the other hand, if the current vehicle position is in a suburb (step S32: No), the operation table 2, which is suitable for use in suburbs, is selected (step S39). The operation table 1 was used as an example in which SNR and vehicle speed are employed as parameters, and which is suited for change in reception state due to influence by buildings or other obstructions typically located in urban areas. The operation table 2 is used as an example in which received power and vehicle speed are employed as parameters, and which is suited for changes in reception state resulting from decreases in received power or other changes that typically occur in suburban areas. In urban areas, the SNR is sometimes low despite a high received power because of the influence of multipathing caused, for example, by buildings. Accordingly, SNR rather than received power is used in urban areas. This switching of the operation table allows for a more adaptable response to a change in the reception state of the receiver.

If the location is determined to be an urban area at step S32 (step S32: Yes), and the operation table-1 depending on SNR and vehicle speed is selected (step S33), then the parameter acquiring unit 5 acquires the value of the SNR serving as the first parameter and the value of the vehicle speed serving as the second parameter in the selected operation table (step S34).

The controlling unit 7 looks up the operation table 1 (see operation table 40 in Fig. 15) stored in the memory unit 8, and makes a judgment based on the acquired value for the SNR. It is determined that the SNR is less than 25 decibels (step S35). If the SNR is less than 25 decibels (step S35: Yes), a judgment is made based on the vehicle speed. In particular, it is determined whether the vehicle speed is less than 30 km/h (step S36). If the vehicle speed is less than 30 km/h (step S36: Yes), the reception condition is changed (step S37), and the process ends.

According to this processing, the controlling unit 7 controls the reception signal output unit 2. The reception signal output unit 2 switches the currently selected antenna to another antenna. For example, when the antenna 1a is currently selected, the other antenna 1b is selected.

In the case that the SNR is equal to or more than 25 decibels at step S35 (step S35: No) and the case that the vehicle speed is equal to or more than 30 km/h at step S36 (step S36: No), the reception condition is not changed (step S38), and the process ends.

If the location is determined as a suburb at step S32 (step S32: No), and the operation table-2 including received power and vehicle speed is selected (step S39), then the parameter acquiring unit 5 acquires data the value of the received power serving as the first parameter and the value of the vehicle speed serving as the second parameter in the selected operation table (step S40).

The controlling unit 7 looks up the operation table 2 (see operation table 15 in Fig. 6) stored in the memory unit 8, and makes a judgment based on the acquired value of the received power. In particular, it is determined whether the received power is less than -60 decibel milliwatt (step S41). If the received power is less than -60 decibel milliwatt (step S41: Yes), a judgment is made based on the vehicle speed. In particular, it is determined whether the vehicle speed is less than 30 km/h (step S42). If the vehicle speed is less than 30 km/h (step S42: Yes), the reception condition is changed (step S43), and the process ends.

Accordingly, the controlling unit 7 controls the reception signal output unit 2 to switch the currently selected antenna to another antenna. For example, if the antenna 1a is currently selected, then the other antenna 1b is selected.

In the case that the received power is equal to or more than -60 decibel milliwatt at step S41 (step S41: No) and the case that the vehicle speed is equal to or more than 30 km/h at step S42 (step S42: No), the reception condition is not changed (step S44), and the process ends.

According to the configuration of the third example, a plurality of operation tables comprising the first parameter and the second parameter are prepared, and an optical operation table is selected according to the change in the reception condition. Therefore, the reception condition can be changed by knowing the appropriate condition that changes and using the parameters suited for the particular case. Also in the third example, since the selected operation table considers not only a change in a reception signal value but also a change in a reception environment value other than reception signal, a stable reception can be achieved by finely responding to a change in the reception condition.

In the embodiments of the present invention, a single tuner diversity receiver was explained as a concrete example. The present invention, however, may be applied to a receiver of double tuner diversity having two tuners and combining outputs of plural tuners, as well as to receivers having more than two tuners.

The receivers explained in the embodiments of the present invention can be controlled by making a computer, such as a personal computer, execute a reception controlling program prepared in advance. Such a program can be stored in a computer-readable recording medium, such as hard disk, flexible disk, CD-ROM, MO, DVD or other storage medium, and executed by being read from the recording medium by a computer. In addition, such a program may be a transmission medium which is distributable through a network, such as the Internet.

As described above, the receivers, receiving methods, reception controlling programs, and recording programs as described in the embodiments of the present invention can be applied in the fields concerning broadcasting and communication, and can be applied to a radio or television apparatus and a navigation system incorporating the same, as well as to a broadband wireless system. Stable reception quality can be implemented in a vehicle, such as a car, train, or vessel, or mobile receivers where the reception state frequently changes.

The present document incorporates by reference the entire contents of Japanese priority document, 2004-036787 filed in Japan on February 13, 2004.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A receiver comprising:
a plurality of antennas (1a, 1b) that receive a signal;
a reception signal output unit (2) that selects the signal received by one or more of the antennas (1a, 1b) or a combination of the signals received by one or more of the antennas (1a, 1b) based on a condition;
a signal processing unit (3) that processes the selected signals;
a parameter acquiring unit (5) that acquires a plurality of parameters including at least one parameter concerning the received signal; and
a controlling unit (7) that determines whether to change the condition based on the parameter concerning the received signal and that changes the condition based on the determination.

2. The receiver according to claim 1, further comprising:
a memory unit (8) that stores an operation table specifying situations for changing the condition based on a combination of the plurality of parameters, wherein the controlling unit (7) references the operation table to determine whether to change the condition.

3. A receiver comprising:
a plurality of antennas (1a, 1b) that receive a signal;
a reception signal output unit (2) that selects the signal received by one or more of the antennas (1a, 1b) or a combination of the signals received by one or more of the antennas (1a, 1b) based on a condition;
a signal processing unit (3) that processes the selected signals;
a parameter acquiring unit (5) that acquires a first parameter concerning the received signal and a second parameter; and
a controlling unit (7) that determines whether to change the condition based on the first parameter and the second parameter, and that changes the condition based on the determination.

4. The receiver according to claim 3, wherein the second parameter is a parameter concerning the received signal.

5. The receiver according to claim 3, wherein the second parameter is a reception environment parameter of the received signal.

6. The receiver according to any one of claims 3 to 5, further comprising:
an input unit for inputting a value of the second parameter or for inputting information for calculating the second parameter.

7. The receiver according to any one of claims 3 to 6, wherein the parameter acquiring unit (5) acquires as the second parameter a plurality of parameters which are different from each other.

8. The receiver according to any one of claims 3 to 7, further comprising:
a memory unit (8) that stores an operation table specifying situations for changing the condition based on the first parameter and the second parameter, wherein the controlling unit (7) references the operation table to determine whether to change the condition.

9. The receiver according to claim 8, wherein the memory unit (8) stores a plurality of operation tables for respective combinations of the first parameter and the second parameter.

10. The receiver according to claim 9, wherein the parameter acquiring unit (5) acquires a table setting parameter, and the controlling unit (7) selects one operation table from the plurality of operation tables stored in the memory unit (8) based on the table setting parameter and determines whether to change the condition based on the selected operation table.

11. A method of receiving, comprising:
selecting a signal received by one or more of antennas or a combination of signals received by the antennas based on a condition;
processing the selected signal;
acquiring a plurality of parameters including at least one parameter concerning the received signal;
determining whether to change the condition based on the acquired parameters; and
changing the condition based on the determination.

12. A computer program that causes a computer to control a receiver so as to execute:
selecting a signal received by one or more of antennas or a combination of signals received by the antennas based on a condition;
processing the selected signal;
acquiring a plurality of parameters including at least one parameter concerning the received signal;
determining whether to change the condition based on the acquired parameters; and
changing the condition based on the determination.

13. A computer-readable recording medium that stores the computer program according to claim 12.
